Europäisches Patentamt

European Patent Office

Office européen des brevets

(11) Veröffentlichungsnummer: **0 136 550**
A2

(12) **EUROPÄISCHE PATENTANMELDUNG**

(21) Anmeldenummer: **84110335.1**

(22) Anmeldetag: **30.08.84**

(51) Int. Cl.⁴: **G 01 N 1/00**

(30) Priorität: **06.10.83 CH 5448/83**

(43) Veröffentlichungstag der Anmeldung:
**10.04.85 Patentblatt 85/15**

(84) Benannte Vertragsstaaten:
**CH DE FR GB IT LI NL SE**

(71) Anmelder: **CONTRAVES AG**
**Schaffhauserstrasse 580**
**CH-8052 Zürich(CH)**

(72) Erfinder: **Feier, Markus**
**Rebbergstrasse 14**
**CH-8112 Otelfingen(CH)**

(72) Erfinder: **Rüegg, André**
**Ueberlandstrasse 451**
**CH-8051 Zürich(CH)**

(72) Erfinder: **Stait, Donald Peter**
**Im Schibler 5**
**CH-8162 Steinmaur(CH)**

(54) **Dosier- und Mischvorrichtung für fluide Medien.**

(57) Es wird eine Dosier- und Mischvorrichtung (10, 20, 30) für fluide Medien vorgeschlagen, welche mindestens ein zuführendes Element (1; 25; 40, 45) und ein abtrennendes Element (5; 21; 35) umfasst.

Zur Aufnahme und Abtrennung einer voluminierten Probemenge sowie zur Zuführung und Vermischung dieser Probemenge mit einer voluminierten Verdünnung sind die Elemente mit entsprechend zueinander angeordneten Durchfluss- und Dosieröffnungen versehen.

Die Dosier- und Mischvorrichtung zeichnet sich dadurch aus, dass auf der dem zuführenden Element (1; 25; 40, 45) zugewandten Fläche (5'; 21'; 36, 36') des abtrennenden Elements (5, 21, 35) mindestens ein der Dosieröffnung (6; 26; 32) entsprechend zugeordneter Kanal (4, 7; 33, 33'; 34, 34') vorgesehen ist. Der einzelne, mit Durhflussöffnungen (4', 4", 7', 7"; 24', 24", 41, 42; 46, 47) in Verbindung stehende Kanal wird von einem im Transportweg der Probemenge die einander zugewandten und miteinander kontaktierenden Transferflächen (1', 5'; 21', 25'; 36, 40'; 36', 45') der einzelnen Elemente (1, 5; 21, 25; 35, 40, 45) beaufschlagenden Reinigungsfluid durchströmt.

EP 0 136 550 A2

./...

FIG.7

## Dosier- und Mischvorrichtung für fluide Medien

Die Erfindung bezieht sich auf eine Dosier- und Mischvorrichtung für fluide Medien, bestehend aus mindestens einem abtrennenden und mindestens einem zuführenden Element, welche Elemente zur Aufnahme und Abtrennung mindestens einer voluminierten Probemenge sowie zur Zuführung und Vermischung dieser Probemenge mit einer voluminierten Verdünnung entsprechend ausgebildete und zueinander angeordnete Durchfluss- und Dosieröffnungen aufweisen.

Aus der DE-C 17 73 226 ist eine Dosier- und Verteilervorrichtung bekannt, welche im wesentlichen zwei Aussenteile sowie ein dazwischen angeordnetes, um eine Achse schwenkbar gelagertes Mittelteil aufweist. In den einzelnen, plattenartig ausgebildeten Teilen sind entsprechend zueinander angeordnete Durchtrittsöffnungen vorgesehen, welche durch eine entsprechende Schwenkbewegung des Mittelteils entweder unterbrochen oder aber miteinander in Verbindung gebracht werden. Diese Vorrichtung dient zur Aufnahme und Abtrennung einer bestimmten Probemenge und zur Mischung dieser Probemenge mit einer bestimmten Verdünnungsmenge.

Eine weitere Dosier- und Verteilervorrichtung ist aus der DE-A 28 54 303 bekannt, welche sich im wesentlichen aus einem drehbaren Mittelteil sowie einem ersten und einem zweiten, unbeweglichen Aussenteil zusammensetzt. Das Mittelteil und die beiden Aussenteile sind scheibenförmig ausgebildet und koaxial auf einer Spindel angeordnet, wobei die Aussenteile mit ihren dem Mittelteil zugewandten Flächen das Mittelteil kontaktierend beaufschlagen. Zur Aufnahme, Abtrennung und Zuführung einer flüssigen Probemenge mit einem Verdünnervolumen sind die einzelnen Teile mit entsprechend ausgebildeten und angeordneten Durchflussöffnungen versehen.

Bei den bekannten Dosier- und Verteilervorrichtungen wird die zu analysierende Flüssigkeitsprobe, zum Beispiel eine Blutprobe, für die Beschickung mit einem vorbestimmten Verdünnervolumen aus einer ersten Stellung in eine zweite Stellung transportiert. Hierbei entstehen, insbesondere im Transferbereich, zwischen den kontaktierenden Flächen der einzelnen Elemente schmierfilmartige Probeablagerungen, welche eine den Funktionsablauf störende Klebewirkung verursachen und somit in relativ geringen Zeitabständen aufwendige Wartungs- und Reinigungsarbeiten erfordern.

Der Erfindung liegt daher die Aufgabe zugrunde, eine Vorrichtung der eingangs genannten Art zu schaffen, mit der beim Transfervorgang der aus den jeweiligen Stellungen in andere Stellungen bewegten Medien gleichzeitig eine Reinigung der kontaktierenden Flächen der einzelnen Elemente gewährleistet ist.

Diese Aufgabe wird dadurch gelöst, dass auf der dem zuführenden Element zugewandten Fläche des abtrennenden Elements mindestens ein Kanal vorgesehen ist, welcher von einem im Transportweg der Probemenge die einander zugewandten und miteinander kontaktierenden Transferflächen der einzelnen Elemente beaufschlagenden Reinigungsfluid durchströmt wird.

Bei einer Dosier- und Mischvorrichtung für fluide Medien mit einem zweiteiligen, zuführenden und einem dazwischen angeordneten, um einen Achskörper drehbaren, abtrennenden Element, welche Elemente kreisscheibenförmig ausgebildet und zur Zuführung und Vermischung einer voluminierten Probemenge mit einer voluminierten Verdünnung entsprechend ausgebildete und am Umfang verteilt angeordnete Durchflussöffnungen aufweisen, ist nach einem weiteren Merkmal der Erfindung das mittlere, abtrennende Element an beiden, den zuführenden Elementen zugewandten Flächen mit einem inneren und einem äusseren, jeweils mit Durchflussöffnungen in Verbindung stehenden Ringkanal versehen, die im Bereich der im drehbaren Element vorgesehenen Durchflussöffnung durch einen radial nach aussen gerichteten Stichkanal verbunden sind.

**0136550**

Weitere Merkmale der Erfindung ergeben sich aus der folgenden Beschreibung in Verbindung mit der Zeichnung und den Patentansprüchen. Die Erfindung wird nachstehend anhand von Ausführungsbeispielen unter Bezugnahme auf die Zeichnung beschrieben.

Es zeigt:

Fig. 1  eine schematisch in Schnittansicht dargestellte
Dosier- und Mischvorrichtung in einer ersten Stellung,

Fig. 2  die Vorrichtung gemäss Fig. 1 in einer zweiten
Stellung,

Fig. 3  die in Draufsicht dargestellte Vorrichtung gemäss der

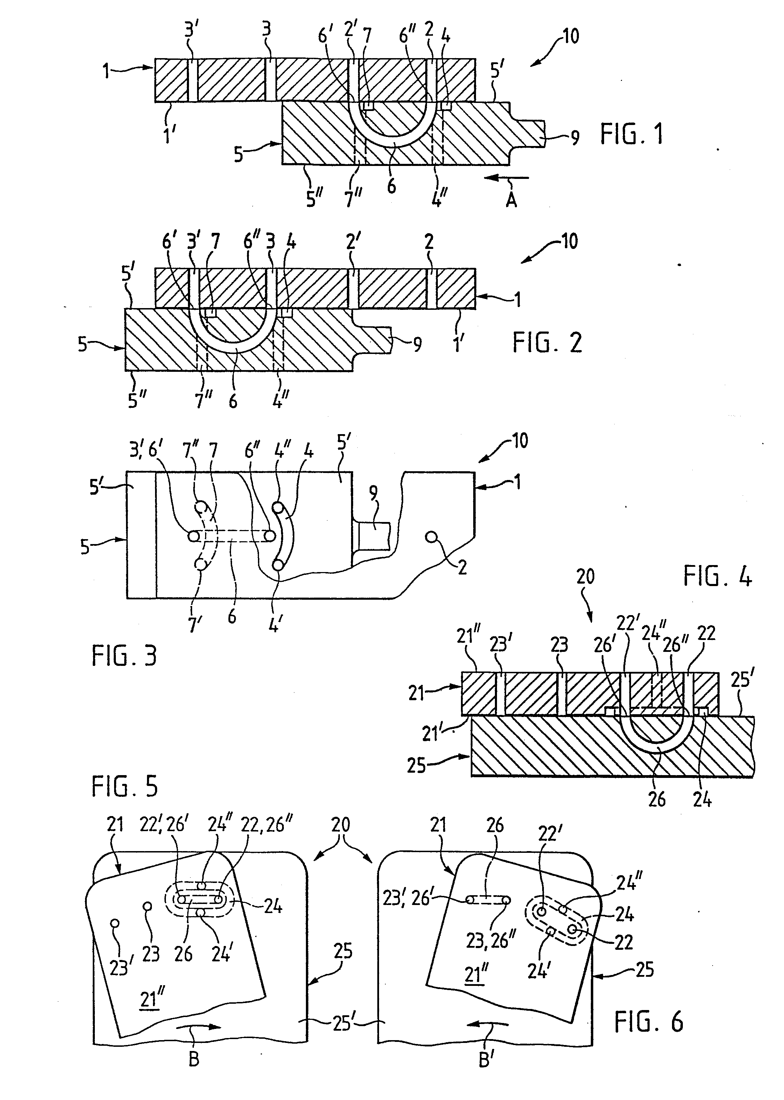

in Fig. 2 dargestellten Stellung,

Fig. 4  eine schematisch und in Schnittansicht dargestellte
erste Variante einer Dosier- und Mischvorrichtung,

Fig. 5  die in kleinerem Massstab und in Draufsicht dargestellte Vorrichtung gemäss Fig. 4 in einer ersten
Stellung,

Fig. 6  die in kleinerem Massstab und in Draufsicht dargestellte
Vorrichtung gemäss Fig. 4 in einer zweiten Stellung,

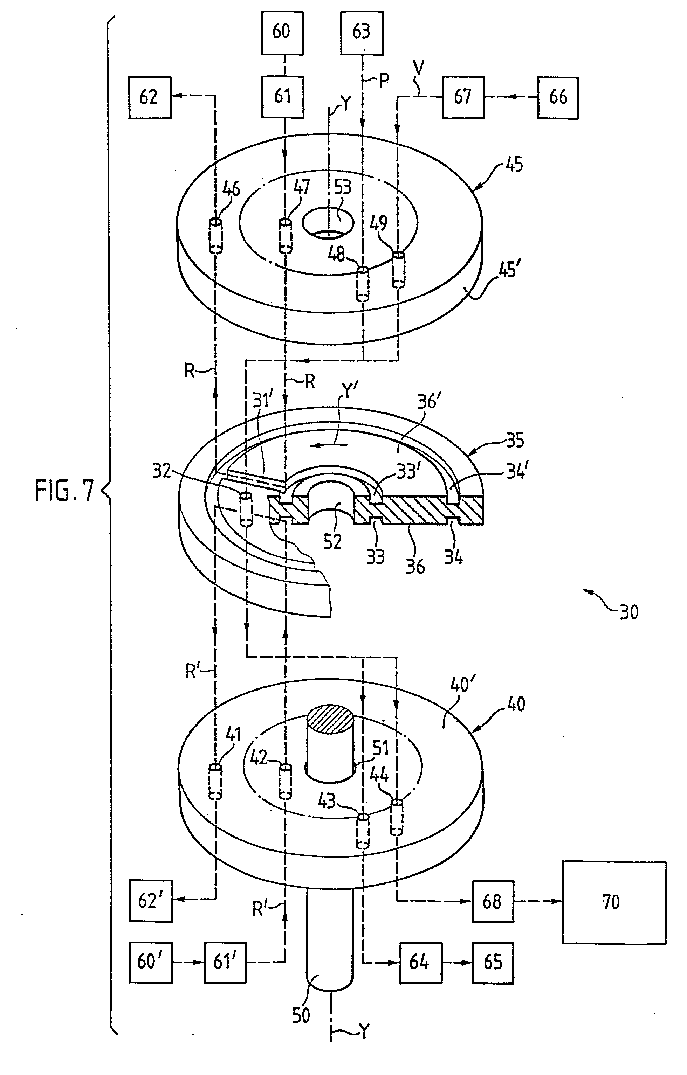

Fig. 7  eine isometrisch und schematisch in Sprengansicht
dargestellte zweite Variante einer Dosier- und
Mischvorrichtung,

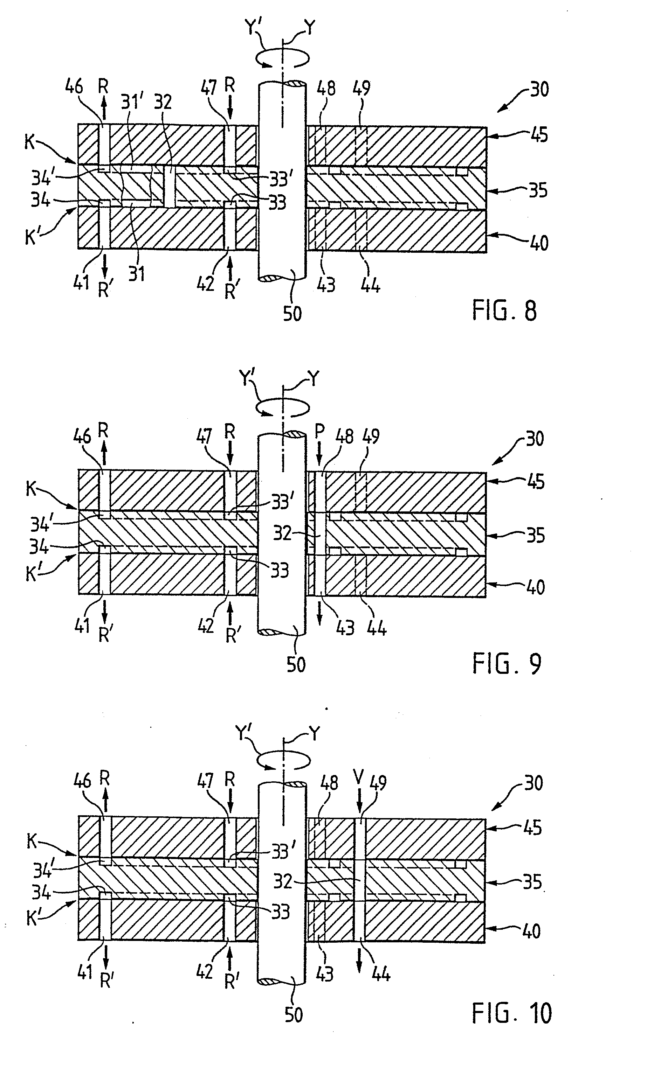

Fig. 8  die in Schnittansicht dargestellte Vorrichtung gemäss
Fig. 7 in einer ersten Stellung,

Fig. 9  die in Schnittansicht dargestellte Vorrichtung gemäss
Fig. 7 in einer zweiten Stellung,
und

Fig. 10 die in Schnittansicht dargestellte Vorrichtung gemäss
Fig. 7 in einer dritten Stellung.

In Fig. 1 ist mit 10 ein erstes, vereinfacht dargestelltes Ausführungsbeispiel einer Dosier- und Mischvorrichtung bezeichnet,
welche im wesentlichen ein stationäres Element 1 und ein seitlich
mit nicht dargestellten Mitteln geführtes, geradlinig in Pfeilrichtung A bewegbares Element 5 umfasst. Das obere, stationäre
Element 1 hat mindestens vier achsparallel, im Abstand zueinander
angeordnete Durchflussöffnungen 2,2' und 3,3'.

In dem beweglichen Element 5 ist eine kreisbogenförmig ausgebildete
Dosieröffnung 6 angeordnet, welche an der dem kontaktierenden Element 1 zugewandten Fläche 5' in zwei im Abstand zueinander angeordnete Oeffnungen 6', 6" mündet. Der Abstand zwischen den beiden
Oeffnungen 6,6" entspricht dem Abstand der in dem Element 1 angeordneten Durchflussöffnungen 2,2' und 3,3', welche in der in Fig. 2
dargestellten Stellung mit den Durchflussöffnungen 3,3' deckungsgleich sind. An der oberen, der Fläche 1' des Elements 1 zugewandten
Fläche 5' des Elements 5 ist im Bereich der Oeffnungen 6',6" jeweils
ein Kanal 4 und 7 angeordnet. Der Kanal 4 steht, wie in Fig. 1 und
Fig. 2 dargestellt, mit zwei Bohrungen 4',4" und der Kanal 7 mit
zwei Bohrungen 7',7" mit der unteren Fläche 5" des Elements 5 in
Verbindung. An dem einen Ende des Elements 5 ist ein teilweise dargestellter Betätigungsarm 9 für die Bewegung in Pfeilrichtung A angeordnet.

Fig. 3 zeigt die teilweise aufgebrochen dargestellte Dosier- und
Mischvorrichtung 10 in Draufsicht gemäss der in Fig. 2 dargestellten
Stellung und man erkennt die beiden Elemente 1 und 5, die deckungsgleichen Durchflussöffnungen 3,6"; 3',6' und die Dosieröffnung 6 sowie die im wesentlichen quer zur Bewegungsrichtung A orientierten
Kanäle 4 und 7 mit den Bohrungen 4',4" und 7',7".

In Fig. 4 ist mit 20 eine erste Variante einer Dosier- und Mischvorrichtung bezeichnet, welche ein stationäres Element 25 und ein um
einen nicht dargestellten Achszapfen, wie in Fig. 5 und Fig. 6 dargestellt, in Pfeilrichtung B,B' schwenkbares Element 21 aufweist.

Das obere, schwenkbare Element 21 hat mindestens vier entsprechend
der Schwenkbewegung, im Abstand zueinander angeordnete Durchflussöffnungen 22,22' und 23,23'. An der unteren, dem Element 25 zugewandten Fläche 21' des Elements 21 ist im Bereich der Durchflussöffnungen 22,22' ein ringförmig ausgebildeter Kanal 24 angeordnet,
welcher mit zwei Bohrungen 24',24" mit der oberen Fläche 21" des
Elements 21 in Verbindung steht. Die Durchflussöffnungen 23,23' sind
in Fig. 4 versetzt, sichtbar gezeichnet.

In dem stationären Element 25 ist eine kreisbogenförmig ausgebildete Dosieröffnung 26 angeordnet, welche an der dem kontaktierenden Element 21 zugewandten Fläche 25' in zwei im Abstand zueinander angeordnete Oeffnungen 26',26" mündet. Die Durchflussöffnungen 22,22' und 23,23' sind derart zueinander angeordnet, dass sie in der jeweiligen Stellung, wie in Fig. 5 und 6 dargestellt, nach der Schwenkbewegung in Pfeilrichtung B beziehungsweise B' deckungsgleich mit den Oeffnungen 26',26" der Dosieröffnung 26 sind.

In Fig. 7 ist in isometrischer Sprengansicht ein bevorzugtes Ausführungsbeispiel einer Dosier- und Mischvorrichtung 30 dargestellt, welche im wesentlichen ein erstes, stationäres Element 40, ein bewegliches Element 35 sowie ein zweites, stationäres Element 45 umfasst. Die Elemente 35,40 und 45 werden nachstehend im einzelnen beschrieben.

Das obere, stationäre Element 45 ist kreisscheibenförmig ausgebildet und mit mehreren Durchflussöffnungen 46,47,48 und 49 sowie mit einer Mittelbohrung 53 versehen.

Das untere, stationäre Element 40 ist ebenfalls kreisscheibenförmig ausgebildet und mit mehreren Durchflussöffnungen 41,42,43 und 44 sowie mit einer Mittelbohrung 51 versehen.

Das mittlere, kreisscheibenförmig ausgebildete Element 35 ist im zusammengebauten Zustand kontaktierend zwischen dem unteren und dem oberen Element 40,45 angeordnet. An der unteren und oberen den Elementen 40,45 zugewandten Fläche 36,36' des Elements 35 ist jeweils ein äusserer Ringkanal 34,34' sowie ein innerer Ringkanal 33,33' vorgesehen. Die beiden Kanäle 33' und 34' sind durch einen Stichkanal 31' miteinander verbunden, wobei die Kanäle 33 und 34 ebenfalls durch einen in Fig. 7 nicht näher dargestellten und bezeichneten Stichkanal 31 miteinander verbunden sind. Unmittelbar im Bereich des Stichkanals 31' ist in dem in Pfeilrichtung Y' mit nicht dargestellten Mitteln drehbaren Element 35 eine Dosieröffnung 32 vorgesehen.

Das Element 35 wird von einer Mittelbohrung 52 durchdrungen.

In Verbindung mit der voran beschriebenen Dosier- und Mischvorrichtung 30 ist in Fig. 7 weiterhin das Beschickungs- und Strömungssystem schematisch dargestellt. Das Beschickungs- und Strömungssystem umfasst im wesentlichen einen ersten und zweiten Vorratsbehälter 60;60', eine erste und zweite, den Vorratsbehältern 60;60' zugeordnete Pumpe 61;61', einen ersten und zweiten Sammelbehälter 62;62', einen Probenbehälter 63, eine weitere Pumpe 64, einen Sammelbehälter 65, einen Vorratsbehälter 66, eine dem Vorratsbehälter 66 zugeordnete Pumpe 67, einen Produktbehälter 68 sowie ein dem Produktbehälter 68 zugeordnetes Analysegerät 70.

In Fig. 8 ist in Schnittansicht die Dosier- und Mischvorrichtung 30 gemäss Fig. 7 in einer ersten Stellung dargestellt und man erkennt die beiden an einem Achskörper 50 angeordneten, stationären Elemente 40,45 mit den entsprechend korrespondierend zueinander angeordneten Durchflussöffnungen 41,42,43 und 44 sowie 46,47,48 und 49. Zwischen den beiden Elementen 40,45 ist das mit der Dosieröffnung 32 versehene Element 35 angeordnet, welches mit nicht dargestellten Mitteln in bezug auf die beiden Elemente 40,45 um die Symmetrieachse Y des Achskörpers 50 in Pfeilrichtung Y' drehbar ist.

In Fig. 9 ist in Schnittansicht die Dosier- und Mischvorrichtung 30 in einer zweiten Stellung dargestellt, in welcher der Schnitt durch die beiden Durchflussöffnungen 43 und 48 der Elemente 40,45 verläuft und das mittlere Element 35 derart in Pfeilrichtung Y' gedreht wurde, dass die Durchflussöffnungen 48,43 und die Dosieröffnung 32 miteinander korrespondieren.

In Fig. 10 ist in Schnittansicht die Dosier- und Mischvorrichtung 30 in einer dritten Stellung dargestellt, in welcher der Schnitt durch die beiden Durchflussöffnungen 44 und 49 der Elemente 40,45 verläuft und das mittlere Element 35 derart in Pfeilrichtung Y' weiter gedreht wurde, dass die Durchflussöffnungen 49,44 und die Dosieröffnung 32 miteinander korrespondieren.

In den Figuren 8,9 und 10 erkennt man ferner die in dem oberen Element 45 angeordneten Durchflussöffnungen 46;47, die in dem unteren Element 40 angeordneten Durchflussöffnungen 41;42 sowie die in dem mittleren Element 35 angeordneten und den Durchflussöffnungen 41,42,46,47 der Elemente 40,45 entsprechend zugeordneten Ringkanäle 33,33' und 34,34'. Die Durchflussöffnungen 46,47 stehen mit den Ringkanälen 34',33' und die Durchflussöffnungen 41,42 mit den Ringkanälen 34,33 in Verbindung. Die Ringkanäle 33',34' sind durch den in Fig. 8 teilweise aufgebrochen dargestellten Stichkanal 31' und die Ringkanäle 33,34 durch den ebenfalls teilweise aufgebrochen dargestellten Stichkanal 31 miteinander wirkverbunden.

Die voran beschriebenen Dosier- und Mischvorrichtungen 10,20 und 30 dienen zur an sich bekannten Dosierung von Flüssigkeiten, insbesondere zur Aufnahme und Abtrennung einer im Mikroliterbereich voluminierten Blutprobe und zum Transport sowie zur Vermischung dieser Blutprobe mit einer voluminierten Menge einer entsprechenden Verdünnungsflüssigkeit.

Bei der Dosier- und Mischvorrichtung 10 wird die in die Dosieröffnung 6 in an sich bekannter Weise eingebrachte Probemenge durch eine im wesentlichen geradlinige Transportbewegung in Pfeilrichtung A aus der in Fig. 1 dargestellten Stellung in die in Fig. 2 dargestellte Stellung transportiert, in welcher die Probemenge mit der Verdünnungsflüssigkeit vermischt und einem nicht näher dargestel- ten Analysegerät zugeführt wird. Bei dem Transportvorgang werden die Kanäle 4 und 7 von einer Reinigungsflüssigkeit durchströmt und dadurch die von der Probemenge beaufschlagten Flächen 1',5' der Elemente 1 und 5 gereinigt.

Bei der Dosier- und Mischvorrichtung 20 wird die in die Dosieröffnung 26 eingebrachte Probemenge durch eine Schwenkbewegung in Pfeilrichtung B,B' in die entsprechende Stellung transportiert. Hierbei werden einerseits die von der Probemenge beaufschlagten Flächen 21',25' der Elemente 21,25 gereinigt und andererseits umschliesst der ringförmige Kanal 24 in den einzelnen Stellungen die Durchflussöffnungen 22,22' und 23,23' an den beaufschlagten Flächen 21',25' und verhindert dadurch ein Austreten der einzelnen Medien.

Bei der Dosier- und Mischvorrichtung 30 wird das mittlere Element 35 aus der in Fig. 8 dargestellten Stellung gemäss Pfeilrichtung Y' in die in Fig. 9 dargestellte Stellung gedreht. Hierbei ist die Dosieröffnung 32 für die Aufnahme der Probemenge mit den Durchflussöffnungen 43 und 48 der Elemente 40 und 45 deckungsgleich.

Bei einer weiteren Drehbewegung in Pfeilrichtung Y' wird die in die Dosieröffnung 32 eingebrachte Säule der Probemenge abgetrennt und in die in Fig. 10 dargestellte Stellung transportiert, in welcher Stellung die Dosieröffnung 32 für die Aufnahme der Verdünnungsflüssigkeit mit den Durchflussöffnungen 44 und 49 deckungsgleich ist. Das aus der Probemenge und der Verdünnungsflüssigkeit gebildete Medium (Produkt) wird anschliessend dem Analysegerät 70 zugeführt.

Bei dem Dosier- und Mischvorgang der Vorrichtung 30 werden die beaufschlagten Flächen 36,40' und 36',45' der einzelnen Elemente 35, 40,45 von den radial nach aussen gerichteten und die Ringkanäle miteinander verbindenden Stichkanälen 31,31' gereinigt, während die mit den Durchflussöffnungen 41,42,46,47 in Verbindung stehenden Ringkanäle 33,34 und 33',34' ständig von einer Reinigungsflüssigkeit durchströmt werden.

In Fig. 7 sind mit gestrichelt dargestellten Linien sowie mit Pfeilen und in den Figuren 8,9 und 10 nur mit Pfeilen die Fliessrichtungen der einzelnen Medien dargestellt, wobei jeweils mit R und R' die Reinigungsflüssigkeit, mit P die Probemenge und mit V die Verdünnungsflüssigkeit bezeichnet ist.

Bei den Ausführungsbeispielen der Dosier- und Mischvorrichtungen 20 und 30 gemäss Fig. 4 bis 10 verhindert/verhindern der ringförmige Kanal 24 beziehungsweise die inneren und äusseren Ringkanäle 33,33' und 34,34' zusätzlich zu der Reinigungswirkung noch ein Austreten der Verdünnungsflüssigkeit (Kochsalzlösung), wodurch eine den Funktionsablauf störende Kristallisation an den in Fig. 8,9 und 10 mit K bezeichneten Kontaktstellen der einzelnen Elemente vermieden wird.

Bei einem nicht dargestellten Ausführungsbeispiel der in den Figuren 7 bis 10 dargestellten Dosier- und Mischvorrichtung 30 kann das mittlere Element 35 an beiden, den Elementen 40,45 zugewandten Flächen 36,36' in mehrere, segmentartig ausgebildete Flächenelemente unterteilt sein. Hierbei ist jedes mit einer entsprechenden Dosieröffnung 32 versehene Flächenelement durch einen die Ringkanäle 33, 34 beziehungsweise 33',34' miteinander verbindenden Stichkanal 31, 31' unterteilt.

Bei einem weiteren, nicht näher dargestellten Ausführungsbeispiel der Dosier- und Mischvorrichtung 30 ist das mittlere Element 35 an den den beiden Elementen 40,45 zugewandten Flächen 36,36' mit entsprechend angeordneten Dichtungen versehen. Diese in nicht dargestellten Nuten eingelegten Dichtungen sollen eine optimale Oberflächen-Gleitfähigkeit aufweisen und sind im Bereich zwischen den äusseren Kanälen 34,34' und der umlaufenden Aussenkante sowie zwischen den inneren Kanälen 33,33' und der Mittelbohrung des Elements 35 angeordnet.

An dieser Stelle sei darauf hingewiesen, dass die beweglichen Elemente 5;21;35 eine Medium abtrennende und die stationären Elemente 1;25;40;45 eine Medium zuführende Funktion haben.

Patentansprüche

1. Dosier- und Mischvorrichtung (10;20;30) für fluide Medien, bestehend aus mindestens einem abtrennenden Element (5;21;35) und mindestens einem zuführenden Element (1;25;40;45), welche Elemente zur Aufnahme und Abtrennung mindestens einer voluminierten Probemenge sowie zur Zuführung und Vermischung dieser Probemenge mit einer voluminierten Verdünnung entsprechend ausgebildete und zueinander angeordnete Durchflussöffnungen aufweisen, dadurch gekennzeichnet, dass auf der dem zuführenden Element (1;25;40;45) zugewandten Fläche (5';21';36,36') des abtrennenden Elements (5;21;35) mindestens ein Kanal (4,7;24;33,33',34,34') vorgesehen ist, welcher von einem im Transportweg der Probemenge die einander zugewandten und miteinander kontaktierenden Transferflächen (1',5';21',25';36,40;36',45') beaufschlagenden Reinigungsfluid durchströmt wird.

2. Dosier- und Mischvorrichtung (30) für fluide Medien mit einem zweiteiligen, zuführenden Element (40,45) und einem dazwischen angeordneten, um einen Achskörper (50) drehbaren, abtrennenden Element (35), welche Elemente kreisscheibenförmig ausgebildet und zur Zuführung und Vermischung einer voluminierten Probemenge mit einer voluminierten Verdünnung entsprechend ausgebildete und am Umfang verteilt angeordnete Durchflussöffnungen aufweisen, dadurch gekennzeichnet, dass das mittlere, abtrennende Element (35) an beiden, den zuführenden Elementen (40,45) zugewandten Flächen (36,36') mit einem inneren und einem äusseren, jeweils mit Durchflussöffnungen (41,42,46,47) in Verbindung stehenden Ringkanal (33,33';34,34') versehen ist, und dass die Ringkanäle (33,34; 33',34') im Bereich der Dosieröffnung (32) jeweils durch einen radial nach aussen gerichteten Stichkanal (31,31') verbunden sind.

3. Dosier- und Mischvorrichtung nach Anspruch 1, dadurch gekennzeichnet, dass der den Oeffnungen (6',6") der Dosieröffnung (6) zugeordnete Kanal (4;7) bogenförmig ausgebildet ist und mit Durchflussöffnungen (4',4";7',7") in Verbindung steht.

4. Dosier- und Mischvorrichtung nach Anspruch 1, dadurch gekennzeichnet, dass der den Oeffnungen (26',26") der Dosieröffnung (26) zugeordnete Kanal (24) ringförmig ausgebildet ist und mit Durchflussöffnungen (24',24") in Verbindung steht.

5. Dosier- und Mischvorrichtung nach Anspruch 2, dadurch gekennzeichnet, dass die beiden Flächen (36,36') des abtrennenden Elements (35) durch mehrere, am Umfang verteilt angeordnete und radial nach aussen gerichtete Stichkanäle (31,31') in einzelne, segmentartig ausgebildete Flächenteilstücke unterteilt sind, und dass jedem Stichkanal eine Dosieröffnung (32) zugeordnet ist.

6. Dosier- und Mischvorrichtung nach Anspruch 2, dadurch gekennzeichnet, dass das Element (35) durch zwei innere und zwei äussere, an den Flächen (36,36') des Elements (35) angeordnete Dichtungen in bezug auf die beiden Elemente (40,45) abgedichtet ist.

0136550

FIG. 1

FIG. 2

FIG. 3

FIG. 4

FIG. 5

FIG. 6

0136550

FIG.7

FIG. 8

FIG. 9

FIG. 10